# EUROPEAN PATENT APPLICATION

(11) **EP 4 722 056 A1**
(43) Date of publication of application: **08.04.2026**
(21) Application number: 24204673.8
(22) Date of filing: 04.10.2024
(51) Int. Cl.: B60T 13/58, B60T 17/22, B60W 30/18

(54) **METHOD FOR OPERATING A BRAKE SYSTEM OF A VEHICLE**

(71) Applicant: Volvo Car Corporation, 405 31 Göteborg (SE)
(72) Inventor: KORKAKAKIS, Konstantinos, 40531 Göteborg (SE); JOHANSSON, Staffan, 40531 Göteborg (SE)
(74) Representative: Kransell & Wennborg KB

(57) **Abstract**

The invention relates to a method (100) for operating a brake system (10) of a vehicle (1), the brake system (10) comprising at least one friction brake (11), the method (100) comprising:
- obtaining condition data indicative of a condition of the at least one friction brake (11); and
- providing a control instruction for controlling operation of the at least one friction brake (11) based on the condition data, the control instruction being configured to operate the at least one friction brake (11) and a propulsion system (40) of the vehicle (1) such that the operation of the at least one friction brake (11) is being at least partially compensated by the operation of the propulsion system (40).

## Description

### TECHNICAL FIELD

The present disclosure relates to a method for operating a brake system of a vehicle, a computer program product, a data processing apparatus, and a vehicle.

### BACKGROUND ART

Battery Electric Vehicles (BEVs) typically use brake systems with different types of brakes, namely friction brakes and regenerative brakes. The driver of the vehicle may request deceleration of the vehicle via the brake pedal and/or the acceleration pedal if a so-called One Pedal Drive (OPD) functionality is being used. Alternatively, when the vehicle is using any level of vehicle autonomy or any autonomous mode, such as but not limited to Automatic Cruise Control (ACC), the vehicle itself may administer friction and/or regenerative braking. The deceleration request of the driver may be used as input for blended brake control, which may control which of the different types of brakes, and levels of braking of the of the different type of brakes, that are used for the deceleration.

There may be problems, particularly for BEVs, when regenerative braking is used more, and friction braking is used less. Specifically, this may result in quality issues and potentially reduced lifetime of the friction brakes due to corrosion despite the potential to have a significantly longer component lifetime due to reduced usage.

To reduce the impact of these problems, it is known to for example use corrosion free braking systems by using materials that are resistant to corrosion. However, such systems may cause other or additional issues.

Alternatively, a Disc Cleaning Function (DCF), which cleans the friction brakes or, in other words, removes the corrosion layers from the affected components by operating the friction brakes, may be employed. When using DCF, the friction brakes are used more often than required, thereby reducing the effect of said problem, but at the expense of energy efficiency since regenerative braking will be used less frequently or to a lower degree.

However, it is difficult to know when to operate the friction brakes to reduce the impact of said problems, specifically, to find an optimum, or close to optimum, between reduction of said issues and optimizing the energy efficiency. For example, fixed intervals may be used, at which the friction brakes are used. However, not only are vehicles different, but different drivers also use their vehicles differently, specifically with respect to operating the brake system. Even the same driver may show different usage behavior and further, the surrounding conditions may be different. Accordingly, with a fixed interval the friction brakes will statistically be used too often or too little, therefore either leading to corrosion on the friction brakes or to reduced energy efficiency.

Also, the operation or, in other words, application of the friction brake for DCF may lead to reduced driving comfort because it may be required to decelerate and accelerate the vehicle numerous times. In this case, the vehicle may require more energy for propulsion because it cannot be kept at a steady speed but may need to be accelerated several consecutive times.

### SUMMARY

The problem is at least partially solved or alleviated by the subject matter of the independent claims of the present disclosure, wherein further examples are incorporated in the dependent claims.

According to a first aspect, there is provided a method for operating a brake system of a vehicle, the brake system comprising at least one friction brake, the method comprising:
- obtaining condition data indicative of a condition of the at least one friction brake; and
- providing a control instruction for controlling operation of the at least one friction brake based on the condition data, the control instruction being configured to operate the at least one friction brake and a propulsion system of the vehicle such that the operation of the at least one friction brake is being at least partially compensated by the operation of the propulsion system.

The inventors have found that because energy efficiency is increasing in importance, both regarding increased range and reduced cost, the tendency is to use as much regeneration braking, by means of regenerative brakes of vehicles, as possible. It is anticipated that this trend will continue to rise also going forward. Due to consequent underusage of the friction brakes, it has been found that conditions such as, but not limited to, corrosion may build up on the friction discs and friction pads, which may result in costly quality related problems, as well as other significant issues. Also, other conditions such as contaminated friction discs and pads, e.g., contamination with mud, water and/or snow, may occur. Further, if the friction brakes and overall brake system are not used, they may not be heated up to perform as expected when needed and thus underperforming when required. Specifically, this may be the case with high performance brake systems, e.g., using carbon and/or ceramic materials. Specifically, it has been found that friction brakes in BEVs are used as little as, or even less than, 10 % of the deceleration requests. For this reason, friction brakes may have four or more times the lifetime in BEVs than in vehicles equipped with internal combustion engines. However, the lifetime and performance may be significantly limited if one of the previously mentioned conditions builds up on the friction discs and friction pads. It is noted that the present disclosure is not limited towards friction brakes using friction discs. Other types of friction brakes may also be employed such as but not limited to drum brakes. While a friction disc brake uses a disc, a drum brake uses a drum. Also, while a friction disc brake uses pads, a drum brake uses linings or shoes.

The method of the first aspect of the disclosure provides for operating the brake system of a vehicle having a condition, such as a corroded condition or, in other words, state of corrosion of the at least one friction brake and consequently operating it and thereby dealing with the condition. Advantageously, the brake torque of the at least one friction brake is being at least partially, in particular fully or substantially in full, compensated by the propulsion torque of the propulsion system, thus, in particular fully or substantially in full, leaving the speed or travel speed of the vehicle unaffected. Accordingly, the effect of the operation of the at least one friction brake for dealing with the condition, e.g., removing corrosion or cleaning the friction disc from corrosion, is affecting the driving of the vehicle, in particular the speed of the vehicle, less, substantially less or not at all. Accordingly, the vehicle may perform a DCF by operating the brake system without being noticed by the occupant or occupants of the vehicle. This increases the driving comfort because the occupant or occupants are less, or not at all, exposed to unwanted effects such as vibrations due to decelerations and accelerations of the vehicle due to the DCF, or manual driver intervention for cleaning the brake discs. Combining propulsion torque with friction brake may ultimately allow for more efficient corrosion cleaning and enable disc cleaning at any time and without relying on deceleration requests by the driver.

The method may be in particular, but not only, used for operating a brake system of a battery electric vehicle, a hybrid electric vehicle equipped with an internal combustion engine, an electric vehicle equipped with a fuel cell and/or similar, as long as the vehicle has a brake system comprising at least one friction brake, and optionally at least one regenerative brake. The vehicle may for example be a passenger car, van, motorcycle, truck, train and/or similar. The vehicle may be, but is not limited to be, an autonomously driven vehicle. The vehicle may have any number of friction brakes and/or regenerative brakes and the method may be used independent of the number of friction brakes and/or regenerative brakes. In particular, the vehicle may have one friction brake per wheel and at least one regenerative brake. In particular, the control instruction may be configured to control operation of or, in other words, operate one, multiple or all friction brakes based on the condition data, e.g., depending on which one of the friction brakes has a state of corrosion and potentially which level of corrosion the friction brakes have. Controlling operation or operating a brake or brake operation herein in particular means that the respective brake is engaged or applied to decelerate the vehicle. The operating of the brake or brake operation however may also include releasing the at least one friction brake or stop braking.

The method may generally be applied when the vehicle is travelling and without any limitation towards the speed with which it is travelling. However, the at least one friction brake may already be engaged or be engaging starting from a stillstand of the vehicle, e.g., when it is parked or stopped, e.g., at red lights or in a traffic jam. Alternatively, the at least one friction brake may be engaged during the travelling or at a certain speed of the vehicle, for example.

The method of the first aspect may be an at least partially or fully computer implemented method. This means that at least one, multiple or all of the steps or operations of the method may be carried out by one or more data processing apparatuses. Different steps or operations may be carried out by one or more than one data processing apparatuses or computers comprised in the data processing apparatus(es), which may carry out the steps or operations as defined by the method. The data processing apparatus(es) may be configured as, or provided inside of, one or more Control Units (CUs) of the vehicle, e.g., a control unit of the brake system, generally referred to as Braking Control System, of the vehicle, or be configured as, or provided inside, a central data processing system of the vehicle, generally referred to as core computer.

This does not exclude that steps or operations carried out by other apparatuses or devices than the data processing apparatus(es) may be part of the method. For example, the method may comprise control the operation of, or operating, the at least one friction brake based on the state of corrosion data, wherein the operation is controlled or performed such that the operation of the at least one friction brake is being at least partially compensated by the operation of the propulsion system. The step or operation of control of the operation of, or operating, the at least one friction brake may be in addition or as alternative to the providing of the control instruction, which may in particular be a computer-implemented step or operation. Similarly, any further steps or operations mentioned herein, which relate to the configuration of the control instruction or other entities, which may be computer-implemented, may additionally comprise or alternatively be replaced by steps or operations carried out by other apparatuses or devices than the data processing apparatus(es), in particular by the vehicle, e.g., its brake system and/or propulsion system.

In an example, the control instruction may be configured such that the operation of the at least one friction brake is being compensated by the operation of the propulsion system for causing or, in other words, with the goal of a net zero deceleration of the vehicle by the operation of the at least one friction brake. In particular, the control instruction may be configured to operate the at least one friction brake of the brake system and the propulsion system of the vehicle such that the vehicle substantially has a net zero acceleration or an acceleration substantially corresponding to an acceleration request based on a driver input, e.g., pedal force on a gas pedal, herein generally referred to as acceleration pedal, of the vehicle. The net zero acceleration may mean that the at least one friction brake decelerates the vehicle, and the propulsion system accelerates the vehicle such that the overall acceleration of the vehicle is as close to net zero as possible (herein generally referred to as substantially zero). Net zero means that the positive acceleration and the negative acceleration or, in other words, deceleration, are added and result in a "net" zero sum. Substantially means that the acceleration is approximately zero, close to net zero or exactly net zero. The at least one friction brake may already be engaged or be engaging starting from a stillstand, e.g., when the vehicle is parked or stopped, e.g., at red lights or in a traffic jam. In the alternative of the net zero acceleration, the friction brakes are operated while ensuring that the acceleration requested by the driver is being met, i.e., giving more propulsion torque than would be necessary without operation of the at least one friction brake. Thereby, the at least one friction brake may be operated for e.g., cleaning the at least one friction brake in a convenient way since it may not be noticeable by the driver and not interrupt their driving because the acceleration is not affected by the braking operation based on the control instruction.

In an example, the control instruction may be configured such that the vehicle is controlled to:
- drive at a substantially constant speed in respect to at least one of: a road topography, or a constant speed request based on a driver input;
- have an acceleration corresponding to at least one of: a road topography, or an acceleration request based on a driver input; or
- have a deceleration corresponding to at least one of: a road topography, or a deceleration request based on a driver input.
Specifically, the control instruction may be configured such that the vehicle is controlled to perform any one of the three control options or select, e.g., depending on the situation, one of two or all of the options. The option of control may be chosen according to a driver request or input, a vehicle input, e.g., from an autonomous driving system of the vehicle, and/or the road topography. Road topography may in particular include ascents and descents of the road and/or curvature of the road. For example, when a constant speed is requested by the driver, a certain amount of additional propulsion torque may be added and counteracted with a similar amount of friction brake torque, still maintaining constant speed. The method works similarly when the constant speed is requested by a vehicle input, e.g., from a cruise control of the vehicle or any autonomous driving system of the vehicle capable of any level of autonomous driving. Accordingly, the vehicle input may also be referred to as an at least partially autonomous driving input, e.g., from an at least partially autonomous driving system of the vehicle. Additionally, or alternatively, when the road has an ascent, a constant speed may be maintained by adding an even higher amount of additional propulsion torque to counteract the amount of friction brake torque and the keep the constant speed on the ascending road. Alternatively, for example, in a case when acceleration is requested by the driver, a certain amount of additional propulsion torque may be added and counteracted with the required amount of friction brake torque, to obtain the requested acceleration. Similarly, for a case when deceleration is requested by the driver, a certain amount of additional propulsion torque may be added and counteracted with the required amount of friction brake torque, to obtain the requested deceleration. Also, or alternatively, when the road is ascending or descending according to the road topography, an amount of additional propulsion torque may be added for acceleration or deceleration, which sufficiently counteracts the friction brake torque and the ascend or descend.

According to an example, the method may further comprise determining a friction torque of the at least one friction brake and a propulsion torque of the propulsion system for the control instruction for operating the at least one friction brake and the propulsion system such that an induced vibration and/or noise is decreased, the vibration and/or noise being induced by the at least partial compensation of the operation of the at least one friction brake and the propulsion system. Accordingly, the method provides for a reduced vibration and/or noise level despite providing for the compensation of the brake operation by the propulsion system.

According to an example, the brake system may be further comprising at least one regenerative brake, wherein the control instruction may be further configured to control operation of the at least one regenerative brake based on the condition data. In particular, both, the at least one friction brake and the at least one regenerative brake may be enabled to be operated or be operated based on the control instruction. Specifically, a blending of both, friction braking, and regenerative braking may be enabled by the control instruction. Such combination, hence, mix or blend of combining regenerative and friction braking, may be dependent on the severity of the condition as indicated by the condition data. For example, the control instruction can include setting a brake pressure and/or brake torque of each one of the at least one friction brake and/or the at least one regenerative brake. The control instruction may further be based on other data or signal(s) such as, but not limited to, for example, data or signal(s) indicative of the vehicle speed, a wheel speed of the vehicle, steering angle of the vehicle, and/or similar.

According to an example, the control instruction may be specifying an operation time and/or a nominal brake torque for operating at least one of the at least one friction brake and/or the at least one regenerative brake for the at least one brake operation of the brake system. In particular, the operating time and/or brake torque, in particular different from a default setting of the brake system, may be specified for blending the friction braking and the regenerative braking. In particular, the operation time and/or the nominal brake torque may be specified according to the condition data, in particular a severity thereof, e.g., of a corrosion of the friction brake. In particular, the operation time and/or the nominal brake torque may be specified in correlation, e.g., proportional to, the condition. For example, the operation time may be specified to be longer, and the nominal brake torque may be specified to be higher, for a comparatively more corroded friction brake than for a less corroded friction brake, as may be indicated by the condition data and taken into consideration for providing the control instruction. Similarly, or alternatively, the number of brake operations and/or the friction brakes being operated, or parts thereof being used, may be specified in correlation to the condition, e.g., whether the friction brakes are relatively cool or how far they are heated up for best performance.

According to an example, the control instruction may be configured for varying the brake pressure per revolution of a friction disc of the at least one friction brake. It has been found that there are cases, e.g., with different deviations or variances in the circumferential direction of the friction disc, where only using constant pressure for cleaning the friction brake might not be optimal. Specifically, only when the deviation is constant throughout the circumference of the friction disc, a constant pressure would be beneficial or optimal. However, surface geometry deviations due to e.g., corrosion may be different at different segments, sections or regions, of the friction disc. There may be a specific segment with surface geometry deviations or a single surface geometry deviation. In both of these cases, it is more optimal to apply friction braking on sub-segments of the circumference of the friction disc, and hence of varying pressure per revolution. This means that the braking pressure is not constant over the full rotation or revolution of the friction disc but varies, e.g., to have only or higher braking pressure on the specific segment with surface geometry deviations or on the single surface geometry deviation. For example, a vector of variable length to quantify the brake torque and/or brake torque may be used for the specific sub-segment. For brake calipers that have the capacity to have different contact pressure on inner and outer friction cheek, this concept could also apply to having different friction brake cleaning applications on inner and outer cheeks of the friction disc. This cleaning may be obtained by adding different pressures on inner friction pad and outer friction pad. It should be appreciated that what herein is discussed in relation to friction brakes using friction discs also applies for friction brakes using a drum, i.e. drum brakes.

In an example, the control instruction may be configured for applying different brake pressures on different components of the at least one friction brake. The different brake pressures may be based on the condition data. The condition data may in particular be indicative of the condition on each one of the different components, e.g., a different condition or different severity of the same condition such as a different corrosion state of the different components. Such different components may for example be any of friction disc, friction pad, inner friction cheek, outer friction cheek and/or others dependent on the design of the at least one friction brake. Thereby, a local condition or a condition with greater severity at any one of the components may be handled better and quicker by applying a higher brake pressure at that component rather than using the same brake pressure on all components.

In an example, the control instruction may be specifying an operation time and/or a nominal brake torque for pairs of friction brakes of different axles of the vehicle based on the condition data. Accordingly, the control instruction may be specifying different operation times and/or nominal brake torques for the friction brakes of different axles of the vehicle, where the condition data may be specifying different conditions or severities of the same condition such as corrosion for the friction brakes of different axles.

In an example, the condition data may be indicative of a state of corrosion, a state of contamination and/or a temperature of the at least one friction brake. Alternatively, the condition data may be indicative of a state of corrosion and/or a state of contamination of the at least one friction brake. Thereby, the control instruction may be specifically operating the at least one friction brake to remove the corrosion, remove the contamination and/or heat up the at least one friction brake for better performance, if needed. Specifically, the condition data may be obtained or determined such that it indicates a severity, e.g., amount and/or distribution, of corrosion on the at least one friction brake. Additionally, or alternatively, the condition data may be obtained or determined such that it indicates a severity, e.g., amount and/or distribution, and/or type, e.g., snow, mud, or similar, of contamination on the at least one friction brake. Additionally, or alternatively, the condition data may be obtained or determined such that it indicates the temperature and thus the performance ability of the at least one friction brake.

According to an example, the method may further comprise:
- obtaining brake operation data indicative of a brake pressure and/or a brake torque of the at least one friction brake from at least one brake operation of the at least one friction brake, and
- obtaining deviation data indicative of a deviation of the brake pressure and/or the brake torque from the brake operation data,
wherein the condition data is based on the deviation data.

For obtaining the brake operation data, in particular by the data processing apparatus, the brake pressure and/or brake torque of the at least one friction brake may be modeled and/or measured, in particular by one or more brake pressure and/or torque measurement sensors, which may provide the measurement readings to the data processing apparatus. One or both measurement readings and/or the modeled brake pressure and/or brake torque may then be used by the data processing apparatus to obtain the deviation, condition and/or threshold data, as later specified herein. Specifically, the brake pressure and/or brake torque may be used as determinants for determining the condition, e.g., state of corrosion. By calculating the deviation of the brake pressure and/or the brake torque, the condition may be determined. A condition in the form of state of corrosion may indicate or be an indication of the severity, e.g., in terms of corroded surface, corroded layers and/or corroded mass, of corrosion on the at least one friction brake, e.g., its friction disc and/or friction pad. In particular, the brake pressure and/or brake torque (from the brake operation, e.g., measured or modeled) may be different from an actual or applied brake pressure and/or brake torque. Thus, there may be a difference between the brake pressure and/or brake torque (of the brake operation data) from a nominal or intended brake pressure and/or brake torque, which was chosen or defined for the at least one brake operation when e.g., measuring or modeling the brake pressure and/or brake torque.

The identifying or determining of the condition is based on a deviation, e.g., variance, in particular, a variance over a subset of datapoints, of a brake pressure and/or brake torque of the at least one friction brake during at least one brake operation thereof. The reason for this is that it has been found that the deviation of the brake pressure and/or brake torque is strongly correlated to the condition, e.g., corrosion state of the at least one friction brake. Hence, by obtaining, e.g., measuring and/or modeling, the brake pressure and/or brake torque and determining the deviation thereof, the condition may be very accurately determined. Based on the accurately determined condition, the operation of the at least one friction brake may be controlled, in particular with respect to at least the timing of operation or, in other words, engaging of the at least one friction brake, duration of braking, brake pressure and/or brake torque. Thereby, improved operation of the brake system is provided, in particular such that the regenerative braking can be fully, or close thereto, used, providing improved energy efficiency, but at the same time friction braking is operated more accurately and only when needed to reduce problems associated with the determined condition. What herein generally is referred to as operate a brake can also be referred to as controlling the brake.

The brake pressure may be a measured and/or modeled brake pressure. The brake torque may be a measured and/or modeled brake torque. For example, the brake pressure and/or the brake torque may be directly measured by a sensor arrangement and/or modeled. For example, the brake torque may be modeled by a rate of change of speed, in particular deceleration. The state of corrosion may be indicative of a level of corrosion, e.g., as a relative value, e.g., in percentage, or as an absolute value. For example, the level of corrosion may be based on an estimated percentage of corroded surface, corroded layers and/or corroded mass of corrosion on the at least one friction brake, e.g., its friction disc and/or friction pad.

For example, the deviation, e.g., in the form of a variance, may be any single value, number of values, function, and/or similar, which indicates a deviation of the brake pressure and/or the brake pressure from the brake operation, e.g., measured and/or modeled, in particular from a mean of the at least one brake pressure and/or brake torque. The deviation data or variance may for example be derived by computation or calculation from the brake pressure and/or the brake torque indicated by the brake operation data, e.g., by the data processing apparatus. For example, the variance may be a value of a squared deviation from the mean of the brake pressure and/or the brake torque. Alternatively, the variance or a standard deviation may be any other deviation value indicating the dispersion or spread out of the, e.g., measured and/or modeled, brake pressure and/or brake torque from an average value thereof, e.g., mean, or median value thereof.

The deviation may be obtained, in particular determined, e.g., calculated, over a range or per predefined unit, e.g., time, driving distance, revolution or part of revolution of a friction disc of the at least one friction brake as further exemplary herein described, and/or similar. The deviation may in particular be calculated based on the brake pressure and/or the brake torque, in particular over the range or per predefined unit.

The condition data or condition may for example be obtained based on a comparison of the deviation of the brake pressure and/or the brake torque, e.g., per revolution or any other unit, with a deviation threshold. The deviation threshold may be predefined such that it indicates if the condition requires cleaning of the friction disc and/or the friction pad or generally cleaning shall be done. Cleaning as used herein means that a condition, e.g., corrosion or contamination, on the at least one friction brake is at least partially removed by operating the at least one friction brake. The control instruction may be configured to control operation of the at least one friction brake. Specifically, at least one piston in at least one friction brake or at least one hydraulic pressure in at least one friction brake may be controlled. As non-limiting example, the control instruction may be a data signal or computer code comprising information based on which information it is possible to control operation of a brake. For example, if the threshold is met (or not met, depending on how, and in relation to what, the threshold is set), a control instruction may be provided to operate only at least one regenerative brake, or a combination of the regenerative and the friction brakes in a particular way, and if the threshold is not met (or met, depending on how, and in relation to what, the threshold is set), a control instruction may be provided to operate only the at least one friction brake, or another combination of the regenerative and the friction brakes. The combination, hence, mix or blend of combining regenerative and friction braking, may be dependent on the severity of the condition as indicated by the condition data. For example, the control instruction can include setting the brake pressure and/or brake torque of each one of the at least one friction brake and/or the at least one regenerative brake. The control instruction may further be based on other data or signal(s) such as, but not limited to, for example, data or signal(s) indicative of the vehicle speed, a wheel speed of the vehicle, steering angle of the vehicle, and/or similar.

In an example, the deviation data may be indicative of the deviation, in particular variance, of the brake pressure and/or the brake torque per revolution of a friction disc of the at least one friction brake. For example, the deviation or variance of the brake pressure and/or the brake torque may be determined per partial, e.g., half, or full revolution, or per multiple revolutions of the friction disc. Using the revolutions of the friction disc as unit, the deviation or variance may be easily handled and referenced, in particular when comparing it to a threshold or as value between different friction brakes, for example. For example, groups or samples of full revolutions or rotations may be used for the deviation or variance. Thereby, a very good representation of the state of the at least one friction brake in terms of the condition, e.g., corrosion, can be made when obtaining the condition data. A full revolution or rotation of the friction disc may be calculated by considering the rotational velocity, for example.

In an example, the deviation data may be indicative of an average deviation, in particular average variance, of the brake pressure and/or brake torque for multiple revolutions and/or multiple brake operations. For example, the average deviation or variance of the brake pressure and/or brake torque may be measured over multiple revolutions from one or multiple brake operations. Alternatively, for example, the average deviation or variance may be measured for a predetermined time or number of revolutions, brake operations or a combination thereof. The revolutions and/or brake operations may be either consecutive, e.g., revolutions or brake operations directly following one another, or not. By averaging the deviation or variance over multiple revolutions and/or brake operations, the deviation data may even more accurately and reliably reflect the condition and thereby the control instruction may be determined even more accurately, e.g., in terms of timing the operation of the at least one friction brake, the duration of the operation and/or the nominal brake torque to be applied when operating the at least one friction brake. The average deviation or variance may be any average of the deviation or variance, e.g., a mean variance, a median variance, an extreme value parameter describing a large or full confidence interval, and/or similar.

In an example, the control instruction may be specifying an operation time and/or a nominal brake torque for each one of at least two friction brakes of the brake system based on the condition data. In particular, a brake force ratio may be split up between the two or more friction brakes, e.g., four friction brakes (one per wheel) and/or between different axles or on the same axle, by specifying the operating or operation time and/or the nominal brake torque for each one of the friction brakes based on the state of corrosion data. For example, priority may be given to the friction brake or friction brakes having the most severe condition as indicated by the condition data compared to the ones not having corrosion or having a less severe conditions. The priority may be given, e.g., by configuring the control instruction such that the prioritized friction brake or friction brakes have a longer operating time and/or larger nominal brake torque compared to the other one or more friction brakes.

In an example, the method may further comprise:
- comparing threshold data indicative of one or more of a number of drive cycles, a time, a brake torque, a vibration level, and a noise level from the at least one friction brake to at least one threshold,
wherein the brake operation data, the deviation data and/or the condition data are obtained if the at least one threshold is met. The noise level may in particular be relating to audible noise. In particular, the method may be at least partially initiated or continued by obtaining any one of the brake operation data, the deviation data and/or the condition data. For this initiation or continuance, a number of drive cycles and time, in particular operation time of the vehicle, the at least one friction brake and/or the at least one regenerative brake, may be considered with respect to a threshold, which may be predefined. The initiation or the continuance of the method is carried out if the threshold is met. For the threshold to be met, the value or values of the number of drive cycles, time, measured brake torque and/or noise value must approximately or exactly be equal the value or values of the threshold or exceed or go below the threshold value or values, depending on the definition of the threshold and the respective value(s) to be compared to it. The threshold may be a single value or multiple values, for one, multiple or all of the number of drive cycles, time, measured brake torque, vibration level and/or noise value. The threshold may take any form, e.g., as a sum, average or separate threshold values for one, multiple or all of the number of drive cycles, time, measured brake torque, vibration level and/or noise value. The values of any one of the time, measured brake torque, vibration level and noise level indicated by the threshold data may be quantified over multiple drive cycles. The threshold may accordingly comprise one or more threshold values over multiple drive cycles. The threshold for the, e.g., measured and/or modeled, brake torque, vibration level and/or noise value may be defined such that if the, e.g., measured and/or modeled, brake torque, vibration level and/or noise value meet the threshold, this is considered to be an anomaly which goes beyond the normal or typical operation of the vehicle. Accordingly, for example, the method may be initiated or at least continued only after a predefined number of drive cycles or a predefined time or after a certain anomaly has been detected based on the threshold. In case of the threshold data being indicative of the measured brake torque, the threshold data may be shared with, or be the same as the brake operation data or only once obtained, for example. Alternatively, or additionally, however, other values may be taken for initiating the method, e.g., a charge of a traction battery of the vehicle, a speed of the vehicle, and similar. Also, the method may be based on an algorithm carrying out the steps or operations of the method, wherein the method may be initiated, e.g., by obtaining the brake operation, deviation and/or condition data, based on setting a flag for the disc cleaning function, e.g., to 1, by the algorithm, e.g., after start-up of the vehicle. The flag may be set for a single or several drive cycles of the vehicle, for example. Also, the flag may be set to deactivate the disc cleaning function or method, e.g., after carrying out disc cleaning, depending on the threshold data and/or depending on the deviation as indicated by the deviation data.

In an example, the method may be further comprising:
- operating the brake system, particularly the at least one friction brake based on the control instruction,
- repeating the obtaining of the brake operation data, the deviation data and the condition data after operating the at least one friction brake based on the control instruction, and
- providing an information indicative of a maintenance recommendation of the brake system based on the condition data.
In other words, after operating the at least one friction brake based on the control instruction once or multiple times, if the condition data is still indicative of a severe condition, e.g., with the same or a different threshold being used, the driver may be presented information indicative of a that maintenance is recommended. If the herein disclosed method is repeated a number of times, and the state of corrosion data still is indicative of a corrosion condition, that may indicate that another issue seems to be present, which may not be solved merely by the operation of the friction brake based on carrying out the control instruction, i.e., by using the disc cleaning function. The information may for example be presented to the driver on a display, e.g. a display of an infotainment system and/or of a driver cockpit of the vehicle.

In an example, the brake operation data may be indicative of the brake pressure and/or the brake torque of the at least one friction brake from at least one normalized brake operation of the at least one friction brake, a nominal brake pressure for the at least one friction brake in the normalized brake operation being normalized over time based on a varying pressure on a brake pedal of the vehicle provided by a driver of the vehicle. Hence, instead of using the brake operation directly based on the varying pressure on the brake pedal of the vehicle as provided by the driver, the nominal brake pressure to be applied on the at least one friction brake is normalized over time. The nominal brake pressure may be normalized such that is substantially constant or within a predefined range over time or generally a driver input is filtered out from it, for example. Still, as input, the brake pedal travel, movement of the brake pedal and/or the input of the brake pedal pressure as provided by the driver on the brake pedal may be used. Thereby, the at least one friction brake, in particular its disc and/or pad, may be evenly cleaned from the corrosion. This may enable more efficient use of the friction brake, still achieving sufficient cleaning or removing of corrosion or contamination but increasing the overall energy efficiency of the vehicle.

In an example, the condition data may be obtained if the deviation of the brake pressure and/or the brake torque meets at least one threshold. This may mean that the variance exceeds, goes below, or is approximately or exactly corresponding to the at least one threshold depending on the threshold is set.

According to a second aspect, there is provided a computer program product comprising instructions which, when the program is executed by a data processing apparatus, causes the data processing apparatus to carry out the method of the first aspect of this disclosure. The computer program product may be a computer program or a product in the form of, e.g., a computer readable medium comprising the instructions which, when executed by a data processing apparatus, causes the data processing apparatus to carry out the method of the first aspect of this disclosure.

According to a third aspect, there is provided a data processing apparatus comprising means for carrying out the method of the first aspect of this disclosure. As previously mentioned, for example, the data processing apparatus may comprise one or more computers, computing units or, in other words, processing units. Further, as means, the data processing apparatus may comprise the computer program stored on a storage thereof or the computer readable medium.

According to a fourth aspect, there is provided a vehicle comprising the data processing apparatus of the fourth aspect. Besides this, the vehicle may of course comprise any other element described herein with respect to the vehicle, e.g., the brake system comprising the at least one friction brake and optionally the at least one regenerative brake.

Yet an aspect of the present disclosure refers to a system of vehicle comprising a processor and a memory communicatively coupled to the processer, the memory having stored therein computer-executable components or instructions provided to performing methods of the present disclosure.

It should be noted that the above examples may be combined with each other irrespective of the aspect involved. Accordingly, the method may be combined with structural features and, likewise, the computer program product, data processing apparatus and the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a method according to an example of this disclosure;
- Figure 2: shows a schematic illustration of a vehicle according to an example of this disclosure;
- Figures 3a-3c: show a schematic illustrations of a part of a friction brake at different corrosion conditions and without corrosion;
- Figure 4: shows a three-dimensional graph based on a brake pressure measurement from brake operations of a friction brake; and
- Figure 5: shows the graph of Fig. 4 in two dimensions.

### DETAILED DESCRIPTION

The Figures are merely schematic representations and serve only to illustrate examples of the disclosure. Identical or equivalent elements are in principle provided with the same reference signs.

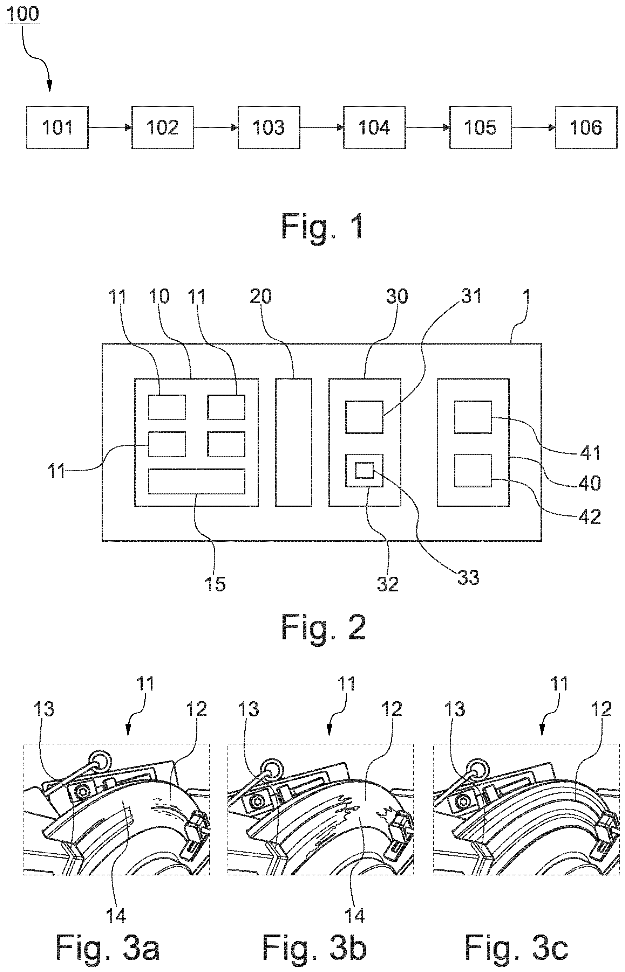

Corrosion build-up in brake systems 10 of vehicles 1 (see Fig. 2) may lead to quality and performance issues. Similarly, although not explicitly shown, other contaminations, e.g., of mud, snow, water, dust, muck, etc. or cold or insufficiently heated brake systems 10 may also lead to quality and performance issues.

Figure 1 shows a schematic illustration of a method 100 for operating a brake system 10 of a vehicle 1 (see Fig. 2). The method 100 as disclosed may ensure that the brake system 10 of the vehicle 1 will be sufficiently operated, e.g., cleaned from the corrosion or contamination or heated up, with minimum amount of energy being used for this purpose. The energy used for this purpose is a result of that using friction brakes 11 instead regenerative brakes 15 (see Fig. 2), reduces the amount of energy that can be regenerated during braking.

In short, the method 100 determines, in particular estimates, the corrosion state of the friction brakes 11 instead of, for example, calculating energy required and energy spent for friction braking, which in most cases would be inaccurate, and uses this determination for determining a control instruction for enabling operation of the brake system 10, in particular the friction brakes 11.

Figure 2 schematically shows a vehicle 1, which may carry out the method 100. The vehicle 1 comprises a brake system 10, comprising at least one friction brake 11 and at least one regenerative brake 11. According to one example the brake system 10 comprises one friction brake 11 and one regenerative brake 15 per wheel of the vehicle 1, hence four friction brakes 11 and four regenerative brakes 15. The vehicle further comprises a propulsion system 40, in turn comprising an electrical motor 42 and a traction battery 41. The regenerative brakes 15 may be part of, or work together with the electric motor 42. During regenerative braking, the regenerative brakes 15 may, by using the electric motor 42 as a generator, utilize friction energy generated during braking to charge the traction battery 41. In this example, the vehicle 1 is configured as a battery electric vehicle and thus comprises the traction battery 41 and the electric motor 42 for propulsion thereof. The present disclosure is also applicable for hybrid vehicles, in which the propulsion system further comprises an internal combustion engine.

The vehicle 1 further comprises a sensor arrangement 20, which may comprise one or more sensors for measuring a brake pressure and/or a brake torque of one or more of the friction brakes 11 from their brake operation. Moreover, the vehicle 1 comprises a data processing apparatus 30 comprising a computer 31, a computer readable medium 32 and a computer program 33 stored on the computer readable medium 32. The computer program 33 comprises instructions which, when executed by the computer 31, cause the vehicle 1 to carry out the method 100 of Fig. 1.

In an operation 101 of method 100, threshold data indicative of one or more of a number of drive cycles, a time, a measured brake torque, a vibration level, and a noise level from one or more friction brakes 11 of the vehicle 1 may be obtained and compared to at least one threshold, in particular by the data processing apparatus 30. The data processing apparatus 30 or any other unit of the vehicle 1 may for example record the number of drive cycles and the drive or operation time, e.g., of the vehicle 1, of the brake system 10, or similar. For obtaining the measured brake torque, the sensor arrangement 20 may be used, which may forward the measurement to the data processing apparatus 30. The vehicle 1 may further comprise, e.g., as part of the sensor arrangement 20, an acoustic sensor for measuring the noise level from the one or more friction brakes 11 when they are being operated. When the threshold data meets the threshold, the method 100 may continue with operation 102.

In operation 102 of method 100, brake operation data indicative of a measured brake pressure and/or a measured brake torque of the one or more friction brakes 11 from at least one brake operation of the one or more friction brakes 11 is obtained, e.g., determined. For this purpose, the sensor arrangement 20 may be used, which may forward the measurements of the brake pressure and/or the brake torque to the data processing apparatus 30, which may be thereby obtained by the data processing apparatus 30. Alternatively, or additionally, the brake pressure and/or the brake torque may be modeled, e.g., by the data processing apparatus 30. Hence, any mention of a measured brake pressure and/or measured brake torque herein may alternatively or additionally relate to a modeled brake pressure and/or modeled brake torque.

The brake pressure and/or the brake torque may be dependent on a current, i.e., when braking, steering angle and/or angular velocity. The brake operation data and/or the herein mentioned deviation data may comprise steering angle and/or angular velocity data, specifically from the current braking. This may improve the accuracy of modelled or calculated brake pressure and/or brake torque.

In an operation 103 of method 100, deviation data indicative of a deviation, e.g., variance of the measured brake pressure and/or the measured brake torque is obtained, in particular determined, by the data processing apparatus 30. Specifically, the computer 31 of the data processing apparatus 30 may calculate the variance of the measured brake pressure and/or the measured brake torque.

In an operation 104 of method 100, condition data indicative of, e.g., a corrosion state of the one or more friction brakes 11 may be obtained, in particular determined, based on the brake operation data and by the data processing apparatus 30. In particular, the condition data may be obtained if the deviation of the measured brake pressure and/or the measured brake torque meets at least one threshold, which may be determined by the data processing apparatus 30. In other words, the condition, here corrosion state, is determined at any one of the friction brakes 11, if the threshold is met by the deviation of the measured brake pressure and/or the measured brake torque.

In an operation 105 of method 100, a control instruction may be provided, e.g., determined by the data processing apparatus 30 and/or to the brake system 10, e.g., a control unit thereof. The control instruction is configured to control operation of or to operate the one or more friction brakes 11, for which the condition was determined based on the condition data being obtained. The control instruction may for example specify an operation time and/or a nominal brake torque, which may then be executed by the braking system 10, in particular a control unit thereof, for operating the one or more friction brakes 11 affected by the corrosion based on the corrosion state and, optionally, any other one of the friction brakes 11 and the regenerative brake 15 in addition. Optionally, the control instruction may also or alternatively be configured to control operation of or operate the one or more friction brakes 11 and the propulsion system 40, in particular the electric motor 42, such that the vehicle 1 substantially has a net zero acceleration or an acceleration substantially corresponding to an acceleration request based on a driver input, e.g., at an acceleration or gas pedal of the vehicle 1, or any level of autonomous driving control, e.g., even if the vehicle 1 should not have an acceleration or gas pedal.

In an operation 106 of method 100, the control instruction is carried out, thereby operating the brake system 10 to clean the one or more corroded friction brakes 11 from corrosion.

It is noted that the operations 101 to 106 of the method 100 are merely exemplary and the method 100 may be less sophisticated. For example, it is also possible to determine the condition data in other ways. For example, if the friction brakes 11 have not been used during the current driving cycle, it may be assessed that the friction brakes 11 are not yet heated up and may require to be heated up for better performance. Accordingly, the control instruction may be provided based on the condition data to increase the braking performance for the case when the friction brakes 11 are needed. By having the control instruction configured to operate the friction brakes 11 and the propulsion system 40 of the vehicle 1 such that the operation of the friction brakes 11 is being compensated by the operation of the propulsion system 40 for causing a substantially net zero deceleration, the driving comfort for the occupants of the vehicle 1 may be kept at a high level.

Figs. 3a to 3c show perspective views on a part of one of the friction brakes 11 at different corrosion conditions or without corrosion. In the corrosion condition shown in Fig. 3a, a relatively large, corroded portion 14 or corroded surface on the friction disc 12 of the friction brake 11 is seen. Similarly, or alternatively, such corroded portion 14 may be present on the friction pad 13 of the friction disc 11 (not shown). The corrosion condition associated with the corroded portion 14 may be determined by the method 100 as described and, correspondingly, the control instruction for the brake system 10 may be carried out.

After the friction brake 11 of the brake system 10 has been operated in accordance with the control instruction, the friction brake 11 may have a less corroded portion 14 as shown in Fig. 3b, where the corroded portion 14 has been reduced compared to Fig. 3a. However, there may be still corrosion present and the method 100 may be repeated based on obtaining the brake operation data and/or the threshold data, e.g., when the audible noise level from the brake operation and/or the measured brake torque still meets the threshold and/or the state of corrosion data is still obtained, i.e., the corrosion condition is still determined to be present. Consequently, when the method 100 is repeated, the friction brake 11 may be brought to a cleaned condition without corrosion or with only little corrosion being presented, as may be seen in Fig. 3c.

However, there may be cases, where the method 100 may be repeated and the cleaning operations of the friction brake 11 may not be sufficient. In this case, e.g., when a number of repetitions of the method 100, in particular a number of control instructions, have been carried out, information indicative of a maintenance recommendation of the brake system 10 may be provided to the driver.

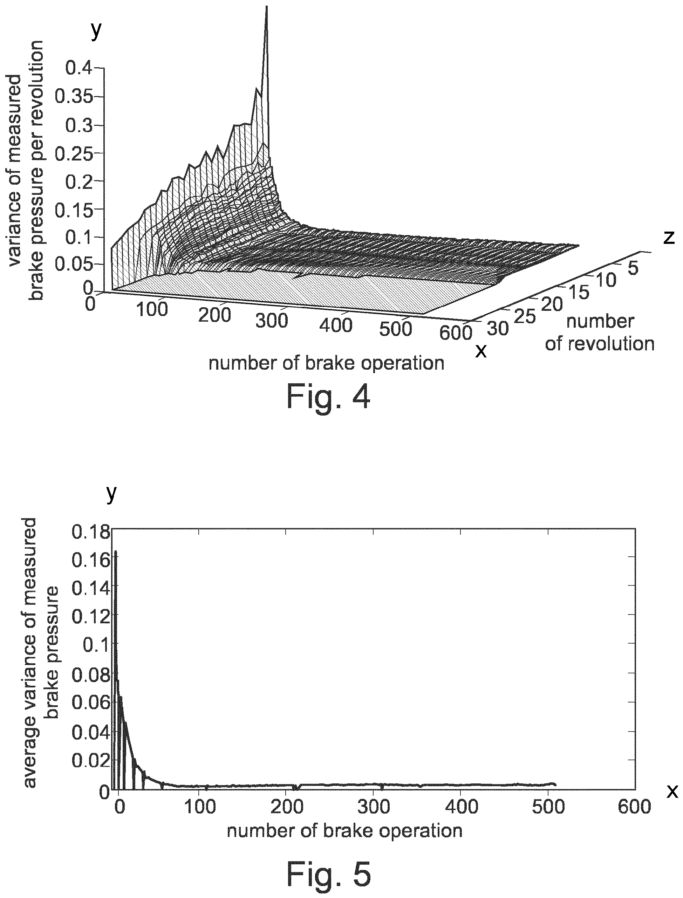

Figure 4 shows a three-dimensional graph based on a brake pressure measurement from several brake operations of a friction brake 11. As can be seem, a first axis (x) of the graph, labeled "number of brake operations", shows number of brake operations ranging from 0 to 500. A second axis (z), labeled "number of the revolution", shows number of revolutions of the friction disc 12 of the friction brake 11. A third axis (y) of the graph, labeled "variance of measured brake pressure per revolution" shows the variance of measured brake pressure per revolution of the friction disc 12, as may be indicated by the deviation data.

Figure 5 shows the same measurement data as shown in Fig. 4 but in a two-dimensional graph, where one axis (x) shows the number of the brake operation and the second axis (y) shows an average, e.g., mean, variance of measured brake pressure per brake operation, which is averaged over all revolutions per brake operation. Using the average variance per revolution or groups, e.g., several, of revolutions and/or brake operation or groups, e.g., several, of brake operations allows to consider statistic data in form of the average variance, which very accurately represents the state of the friction brake, in particular friction disc and/or friction pad. Hence, determining the corrosion state, e.g., its extent or severity, may be done very accurately and thus, the disc cleaning function is only activated when needed or beneficial to increase the energy efficiency of the vehicle 1.

Both, Fig. 4, and Fig. 5 show that, when the friction brake 11 is corroded or, in other words, shows a corrosion state, the variance is the largest during the first few brake operations and decreases over the number of brake operations (and similarly for the revolutions per brake operation). Specifically, Figs. 4 and 5 show the correlation between the corrosion state and the variance, the variance being larger when the corrosion is large. Based on this, it may be very accurately determined based on the variance of the measured brake pressure and/or the measured brake torque, when and how severely the friction brake 11 is corroded in order to accurately determine that disc cleaning is required or beneficial and potentially how much friction braking shall be applied to clean the friction brake 11 or, in other words, remove the corrosion from the friction brake 11.

According to aspects of the disclosure, what herein generally is referred to as brake operation data, indicative of a brake pressure and/or brake torque, may also be referred to as first data, deviation data, indicative of a deviation, e.g. a variance, of the brake pressure and/or brake torque, may also be referred to as second data, the condition data, indicative of a condition or state of, e.g. degree or level of, corrosion or contamination of a friction brake, may also be referred to as third data, and threshold data, indicative of one or more of a number of: drive cycles, a time, a measured brake torque, and a noise level from the at least one friction brake, may also be referred to as fourth data.

As used herein, the word "comprising" does not exclude other elements or steps or operations, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element, operation and/or step referred to herein as "being indicative of [...]" can be synonymously or interchangeably used herein with one, two or all of said entity, element, operation and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an entity or another entity, element or step, does not exclude that the respective entity, element or step may be further or also "based on" any other entity, element or step than the one to which it refers.

Any designation of methods, steps, data and elements as first, second, etc. or similar as may provided herein is merely intended to make the methods, their steps and elements referenceable and distinguishable from one another. Similarly, any descriptive naming of the data as, e.g., brake operation data or deviation data, is merely intended to make the data referenceable and distinguishable from one another and does not constitute a limitation. The data may generally and interchangeably be referred to by numbering, descriptive name or none of these, i.e., simply as data, wherein it may be distinguished by what information the data indicates or comprises. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

Any reference signs in the claims should not be construed as limiting the scope of the claims.

### LIST OF REFERENCE SIGNS

- 1: vehicle
- 10: brake system
- 11: friction brake
- 12: friction disc
- 13: friction pad
- 14: corroded portion
- 15: regenerative brake
- 20: sensor arrangement
- 30: data processing apparatus
- 31: computer
- 32: computer readable medium
- 33: computer program
- 40: propulsion system
- 41: traction battery
- 42: electric motor
- 100: method
- 101 - 106: operations

## Claims

1. A method (100) for operating a brake system (10) of a vehicle (1), the brake system (10) comprising at least one friction brake (11), the method (100) comprising:
- obtaining condition data indicative of a condition of the at least one friction brake (11); and
- providing a control instruction for controlling operation of the at least one friction brake (11) based on the condition data, the control instruction being configured to operate the at least one friction brake (11) and a propulsion system (40) of the vehicle (1) such that the operation of the at least one friction brake (11) is being at least partially compensated by the operation of the propulsion system (40).

2. The method (100) of claim 1, wherein the control instruction is configured such that the operation of the at least one friction brake (11) is being compensated by the operation of the propulsion system (40) for causing a net zero deceleration of the vehicle (1) by the operation of the at least one friction brake (1).

3. The method (100) of claim 1 or 2, wherein the control instruction is configured such that the vehicle (1) is controlled to:
• drive at a constant speed in respect to at least one of: a road topography, or a constant speed request based on a driver input or vehicle input;
• have an acceleration corresponding to at least one of: a road topography, or an acceleration request based on a driver input or vehicle input; or
• have a deceleration corresponding to at least one of: a road topography, or a deceleration request based on a driver input or vehicle input.

4. The method (100) of any one of the previous claims, wherein the method (100) further comprises:
- determining a friction torque of the at least one friction brake (11) and a propulsion torque of the propulsion system (40) for the control instruction for operating the at least one friction brake (11) and the propulsion system (40) such that an induced vibration and/or noise is decreased, the vibration and/or noise being induced by the at least partial compensation of the operation of the at least one friction brake (11) and the propulsion system (40).

5. The method (100) of any one of the previous claims, the brake system (10) further comprising at least one regenerative brake (15), wherein the control instruction is further configured to control operation of the at least one regenerative brake (15) based on the condition data.

6. The method (100) of claim 5, the control instruction specifying an operation time and/or a nominal brake torque for operating at least one of the at least one friction brake (11) and/or the at least one regenerative brake (15) for the at least one brake operation of the brake system (10).

7. The method (100) of any one of the previous claims, wherein the control instruction is configured for varying the brake pressure per revolution of a friction disc (12) of the at least one friction brake (11).

8. The method (100) of any one of the previous claims, the control instruction being configured for applying different brake pressures on different components of the at least one friction brake (11).

9. The method (100) of any one of the previous claims, the control instruction specifying an operation time and/or a nominal brake torque for pairs of friction brakes (11) of different axles of the vehicle (1) based on the condition data.

10. The method (100) of any one of the previous claims, the condition data being indicative of a state of corrosion, a state of contamination and/or a temperature of the at least one friction brake (11).

11. The method (100) of any one of the previous claims, wherein the method (100) further comprises:
- obtaining brake operation data indicative of a brake pressure and/or a brake torque of the at least one friction brake (11) from at least one brake operation of the at least one friction brake (11), and
- obtaining deviation data indicative of a deviation of the brake pressure and/or the brake torque from the brake operation data,
wherein the condition data is based on the deviation data.

12. The method (100) of claim 11,
the deviation data being indicative of the deviation of the brake pressure and/or the brake torque per revolution of a friction disc (12) of the at least one friction brake (11),
and/or
the deviation data being indicative of an average deviation of the brake pressure and/or brake torque for multiple revolutions and/or multiple brake operations.

13. A computer program product (33) comprising instructions which, when executed by a data processing apparatus (30), cause the data processing apparatus (30) to carry out the method (100) of any one of claims 1 to 12.

14. A data processing apparatus (30) comprising means for carrying out the method (100) of any one of claims 1 to 12.

15. A vehicle (1) comprising the data processing apparatus (30) of claim 14.

## Amended claims

### Amended claims in accordance with Rule 137(2) EPC.

1. A method (100) for operating a brake system (10) of a vehicle (1), the brake system (10) comprising at least one friction brake (11), the method (100) comprising:
- obtaining condition data indicative of a condition of the at least one friction brake (11); and
- providing a control instruction for controlling operation of the at least one friction brake (11) based on the condition data, the control instruction being configured to operate the at least one friction brake (11) and a propulsion system (40) of the vehicle (1) such that the operation of the at least one friction brake (11) is being at least partially compensated by the operation of the propulsion system (40).

2. The method (100) of claim 1, wherein the control instruction is configured such that the operation of the at least one friction brake (11) is being compensated by the operation of the propulsion system (40) for causing a net zero deceleration of the vehicle (1) by the operation of the at least one friction brake (1).

3. The method (100) of claim 1 or 2, wherein the control instruction is configured such that the vehicle (1) is controlled to:
• drive at a constant speed in respect to at least one of: a road topography, or a constant speed request based on a driver input or vehicle input;
• have an acceleration corresponding to at least one of: a road topography, or an acceleration request based on a driver input or vehicle input; or
• have a deceleration corresponding to at least one of: a road topography, or a deceleration request based on a driver input or vehicle input.

4. The method (100) of any one of the previous claims, wherein the method (100) further comprises:
- determining a friction torque of the at least one friction brake (11) and a propulsion torque of the propulsion system (40) for the control instruction for operating the at least one friction brake (11) and the propulsion system (40) such that an induced vibration and/or noise is decreased, the vibration and/or noise being induced by the at least partial compensation of the operation of the at least one friction brake (11) and the propulsion system (40).

5. The method (100) of any one of the previous claims, the brake system (10) further comprising at least one regenerative brake (15), wherein the control instruction is further configured to control operation of the at least one regenerative brake (15) based on the condition data.

6. The method (100) of claim 5, the control instruction specifying an operation time and/or a nominal brake torque for operating at least one of the at least one friction brake (11) and the at least one regenerative brake (15) for the at least one brake operation of the brake system (10).

7. The method (100) of any one of the previous claims, wherein the control instruction is configured for varying the brake pressure per revolution of a friction disc (12) of the at least one friction brake (11).

8. The method (100) of any one of the previous claims, the control instruction being configured for applying different brake pressures on different components of the at least one friction brake (11).

9. The method (100) of any one of the previous claims, the control instruction specifying an operation time and/or a nominal brake torque for pairs of friction brakes (11) of different axles of the vehicle (1) based on the condition data.

10. The method (100) of any one of the previous claims, the condition data being indicative of a state of corrosion, a state of contamination and/or a temperature of the at least one friction brake (11).

11. The method (100) of any one of the previous claims, wherein the method (100) further comprises:
- obtaining brake operation data indicative of a brake pressure and/or a brake torque of the at least one friction brake (11) from at least one brake operation of the at least one friction brake (11), and
- obtaining deviation data indicative of a deviation of the brake pressure and/or the brake torque from the brake operation data,
wherein the condition data is based on the deviation data.

12. The method (100) of claim 11,
the deviation data being indicative of the deviation of the brake pressure and/or the brake torque per revolution of a friction disc (12) of the at least one friction brake (11),
and/or
the deviation data being indicative of an average deviation of the brake pressure and/or brake torque for multiple revolutions and/or multiple brake operations.

13. A computer program product (33) comprising instructions which, when executed by a data processing apparatus (30), cause the data processing apparatus (30) to carry out the method (100) of any one of claims 1 to 12.

14. A data processing apparatus (30) comprising means for carrying out the method (100) of any one of claims 1 to 12.

15. A vehicle (1) comprising the data processing apparatus (30) of claim 14.
